# EUROPEAN PATENT SPECIFICATION

(11) **EP 0 958 120 B1**
(45) Date of publication and mention of the grant of the patent: **07.11.2001**
(21) Application number: 98904468.0
(22) Date of filing: 09.02.1998
(51) Int. Cl.: B29C 45/17

(54) **A PROCESS IN THE MANUFACTURING OF A PLASTIC PRODUCT**
VERFAHREN ZUR HERSTELLUNG EINES KUNSTSTOFFGEGENSTANDS
PROCEDE DE FABRICATION D'UN PRODUIT PLASTIQUE

(30) Priority: 10.02.1997 SE 9700469
(43) Date of publication of application: 24.11.1999
(73) Proprietor: PERSTORP AB, 284 80 Perstorp (SE)
(72) Inventor: BRAUNER, Manfred, A-1130 Wien (AT)
(74) Representative: HOFFMANN - EITLE
(86) International application number: SE9800217
(87) International publication number: WO9834771

(56) References cited:
- EP-A- 0 628 395
- EP-A- 0 692 360
- WO-A-90/00466
- WO-A-95/20477

## Description

The present invention relates to an integrated process for the manufacturing of products made of thermoplastic material, which products comprises one or more hollow spaces.

Injection moulded re-usable packages for transport and storage are quite common nowadays. These packages are usually reinforced by means of ribs and profiles so that they can meet the demands on mechanical strength. One disadvantage with such ribs and profiles are that the weight of the package increases and that dirt collecting pockets will form which are difficult to clean. Heavier profiles would partly solve that problem. It is in certain cases desirable with heavier profiles of other reasons. Such profiles will however cause problems in normal injection moulding procedures as the material thickness is not allowed to differ to much within the product. Differences in material thickness will create great problems with warping in the product in most cases.
The problem with warping can be avoided by, for example injecting a gas through separate nozzles or together with the thermoplastic material. The intention is that the gas will form channels or cavities in the thicker parts of the product. The dimensions of the profiles can be made heavier, as seen from the outside while the weight of the product can be decreased, through this procedure. A closed profile, such as a tube, will additionally give a mechanical strength greater than a profile, provided the amount of material used is the same The number of ribs and profiles can hereby be reduced without reducing the mechanical strength, whereby the product will be easier to clean.
One disadvantage with gas channels achieved through the injection of gas together with the molten thermoplastic material is that the material thickness will be difficult to control, since the thermoplastic material is molten or very soft. The risk is also very great that the bubble of molten thermoplastic material, containing gas, ruptures so that the gas escapes, since the gas in the main is the force that distributes the thermoplastic material to all parts of the mould cavity This phenomena is so common that it has been given a name, namely a blow-out. The part will hereby not receive the desired shape and will therefore have to be rejected Furthermore, the product quality of products without these blow-outs will fluctuate since the material thickness will vary form product to product
It is known from WO 90/00466 to inject an amount of plastic greater than required for the finished part. The surplus of thermoplastic material is ejected in to a spill cavity at the injection of the gas after which the thermoplastic material is allowed to solidify.

The problems with the distribution of the thermoplastic material in the mould cavity is hereby reduced. The problem with differences in material thickness does, however, remain. One additional disadvantage is that the thermoplastic material ejected to the spill cavity, possibly together with parts around the inlets, will have to be removed from the product produced by being cut, milled or snapped off after the moulding process, which is ineffective from a manufacturing and economic point of view. The material separated from the product can of course be re-used by being ground and returned to the plastifier of the moulding machine. This handling of the material will however cause a breakdown of the polymer-chains in the thermoplastic material which reduces the mechanical properties in a product manufactured from such a re-used thermoplastic material. One further disadvantage with the process as described in WO 90/00466 is that the pressure the molten thermoplastic resin is exposed to in the mould cavity will not reach desired levels until the spill cavity is filled. This will lead to a poor control of the injection procedure, concerning both thermoplastic material and gas, which could give so called sink-marks, unfilled parts as well as varying material thickness in the walls around the hollow parts.

The above mentioned problems have, through the present invention been solved, whereby a process for the manufacturing of thermoplastic products comprising a hollow space has been achieved. It has, through the process according to the present invention, been made possible to control the material thickness in the walls of the hollow space and to control the pressure in the mould cavity during the critical phase when the hollow space is formed, whereby a considerable improvement in the product quality is achieved. The need for undesired appendages and accordingly, costly post-treatment procedures which also causes deterioration of the thermoplastic material has furthermore been considerably reduced or completely eliminated.
Accordingly, the invention relates to a process in an injection moulding procedure where a plastic product is manufactured in a mould including a hot runner system through which molten thermoplastic material is injected and distributed to at least one mould cavity. The plastic product includes at least one hollow space achieved by means of a pressurised fluid which is injected through at least one fluid channel. The invention comprises a hot runner system provided with at least one means for volume adjustment so that the volume of the hot runner system can be increased and decreased. An amount of molten thermoplastic material is injected through the hot runner system while the volume of the hot runner system is decreased to a predetermined volume. The volume is decreased by means of the volume adjustment means, which decrease in volume corresponds to a part of the amount-of injected molten thermoplastic material. The mould cavity is hereby at least partly, preferably completely filled with molten thermoplastic material. The thermoplastic material is then allowed to solidify somewhat closest to the walls of the mould cavity. This solidification of the thermoplastic resin is caused by the contact with the cooled walls of the mould cavity. A pressurised fluid is then injected into the molten thermoplastic material. At least one hollow space is hereby formed in the still molten thermoplastic material. The pressurised fluid forces molten thermoplastic material back into the hot runner system while the volume of the hot runner system is allowed to increase to a predetermined volume by means of the volume adjustment means. The increase in volume corresponds to the volume of the thermoplastic material forced out of the mould cavity. The pressure of the fluid in the hollow space urges the thermoplastic material towards the walls of the mould cavity. The thermoplastic material in the mould cavity is allowed to solidify further, preferably completely. The fluid is then evacuated whereby the mould cavity can be opened, the product produced be removed and the procedure be repeated after having closed the mould. The thermoplastic material located in the hot runner system is throughout the process kept in a molten state by means of heaters built-in to the hot runner system. The degree of solidification and thereby the wall thickness surrounding the hollow space can be guided by means of the holding time between the plastic injection and the fluid injection. A longer holding time will give higher wall thickness and also a more even material thickness
The decrease in volume of the hot runner system, in connection to the injection of thermoplastic material, is preferably the same as the increase in volume, in connection to the ejection of thermoplastic material caused by the introduction of the pressurised fluid, as calculated in volume units
The volume adjustment means is suitably comprising a cylinder in which a piston has been arranged. This piston is moved back and forward by means of a driving device such as a hydraulic cylinder, pneumatic cylinder, hydraulic motor, electric motor, pneumatic motor or the like. The volume adjustment means is suitably provided with a pressure sensor. This sensor is suitably arranged on the piston or between the piston and the driving device. The pressure sensor is used for the guiding of the force that moves the piston so that the pressure on the molten thermoplastic material will be the desired during the injection of thermoplastic material as well as during the injection of fluid when the hollow space is forming. A hydraulic motor or a stepping motor is suitably used as a driving device since a more precise control of the motion of the piston will be received.

The hot runner system is suitably connected to the mould cavity via two or more inlet gates of which at least one can be closed The risk that the hollow space expands in an undesired direction such as through an inlet gate placed in the proximity of the intended expansion is hereby reduced.
The hot runner system is suitably connected to a plastifier via a valve which prevents molten thermoplastic material from being forced from the hot runner system to the plastifier. This will prevent the pressure from dropping at the injection of fluid.

In cases where a plastic product is intended to include two or more separate hollow spaces, the hot runner system is suitably divided into a primary and two or more secondary hot runner .systems, whereby the secondary hot runners are provided with each one or more means for volume adjustment. The forming of the hollow spaces can hereby be guided independent of each other which will increase the ability to control the process during the manufacturing.
According to one embodiment of the invention, the primary and secondary hot runner system concept can be used in moulds including two or more mould cavities, as for example in so called multi-cavity moulds or stack moulds. The hot runner system is hereby divided into a primary and two or more secondary hot runners. The secondary hot runners are each provided with one or more means for volume adjustment, and will each supply one mould cavity with thermoplastic material. The secondary hot runner systems are in both cases separable from the primary hot runner system and from each other by means of valves which prevent molten thermoplastic material from being forced from a secondary hot runner system to the primary hot runner system or from one secondary hot runner system to another secondary hot runner system. These valves are suitably constituted by clack valves that requires no guiding, however, valves that require guiding can also be used. The latter is suitably guided by means of the control system of the moulding machine.

The fluid used is preferably a gas, most preferably an inert gas such as nitrogen or carbon dioxide. These gases will be in gaseous state in the pressure and temperature interval suited for the process. The thermoplastic material is heated until it reaches a plastic state which normally is in the temperature range from 110 to 250°C depending on the type of material. The thermoplastic material can in this state be injected into the mould cavity The injection is made under pressure which pressure depends on type of material, amount of material to be injected and design of the part. The pressure ranges from a few bar to several hundred bars. The pressure is then continued while the thermoplastic material solidifies to counteract the shrinking caused by the relatively high thermal coefficient of expansion in thermoplastic materials. It is also possible to use other fluids than the above mentioned. Fluids such as, for example, water could be used. Water could be suitable when high pressures are required, since water could be kept in a liquid state during the whole process. It is also possible to use liquids with a boiling point lower than that of water. These will then enter vapour phase when heated by the hot thermoplastic material. The vapour pressure will urge the thermoplastic material towards the walls of the mould cavity while cooling. The vapour will eventually condense back in to a liquid state as the temperature, and thereby also the pressure drops. This condensation temperature is completely dependant on the pressure in the hollow space whereby the boiling point of each liquid must be adapted to the pressure calculated to suit the process.

According to one embodiment of the invention the fluid is injected through a cylindrical hollow space, which in one end is connected to the plastic product. The cylindrical hollow space is filled with molten thermoplastic material which eventually will solidify. The hollow space is designed so that the thermoplastic material in the centre will still be in a molten state when the fluid is injected. A communicating channel is formed in the thermoplastic material in the cylindrical hollow space. The communicating channel runs in to the part where a hollow space can be formed. The other end of the cylindrical hollow space is preferably provided with a piston which can be used for pressing the thermoplastic material located in the cylindrical hollow space into the product. The holes used for the communication of the fluid to and from the product can hereby be sealed. This is an advantage in for example products used in the handling of food provisions since such holes will allow fluids and dirt to enter the hollow space where cultures of bacteria could grow. It is very difficult to clean such hollow spaces. The piston is suitably guided by the control system of the moulding machine and is manoeuvred by means of an electric motor, hydraulic or pneumatic motors or cylinders.

Separate cooling zones are suitably used at the cylindrical hollow spaces and the channel or channels used for the communication of surplus of thermoplastic material to the hot runner system. The solidification rate of the thermoplastic material located in the cylindrical hollow space and the channels can hereby be adjusted to suit the solidification rate for the rest of the thermoplastic material in other parts of the mould cavity. The solidification rate for the thermoplastic material in these parts of the mould can hereby be adjusted so that it doesn't become solid to early or to late in the injection moulding procedure.

The invention is further illustrated together with the enclosed drawings showing different embodiments of the invention wherein,
- figure 1 shows, schematically and in cross-section, a mould 20 with a product made, including a hollow space 1, where the superfluous molten thermoplastic material has been forced back into the of runner system 22 according to a first embodiment of the invention.
- figure 2 shows, schematically and in cross-section, an alternative embodiment of the process shown in figure 1.
- figure 3 shows, schematically and in cross-section, another embodiment of a mould 20 where a plastic product with two separate hollow spaces 1 is manufactured.
- figure 4 shows, schematically and in cross-section, an embodiment where a mould 20 including two separate mould cavities 21 is used.

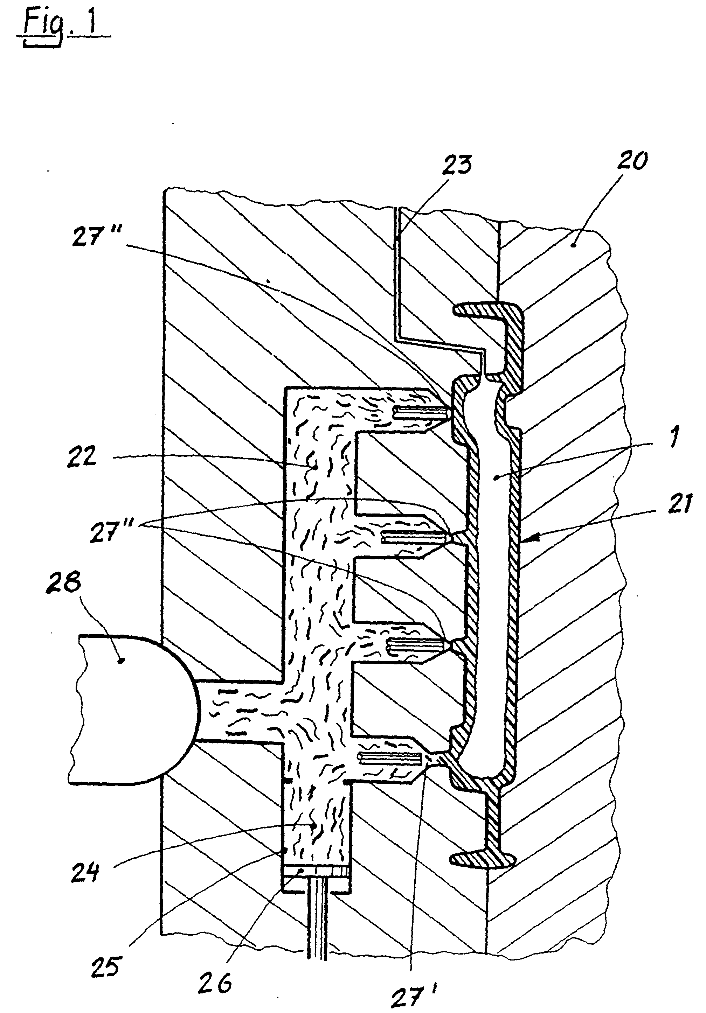

Figure 1 shows, schematically and in cross-section, a mould 20 where a product made of a thermoplastic material is manufactured. The mould 20 comprises a hot runner system 22, through which molten thermoplastic material is injected and distributed to a mould cavity 21. The product includes a hollow space 1 formed by means of a pressurised gas which is injected through a fluid channel 23 The hot runner system 22 is provided with a volume adjusting means 24 which allows its volume to increase and decrease respectively. An amount of molten thermoplastic material is injected from a plastifier 28 through the hot runner system 22 into the mould cavity 21 while the volume of the hot runner system 22 decreases to a predetermined volume by means of the volume adjustment means 24. This decrease in volume corresponds to a part of the injected thermoplastic material. The volume adjustment means 24 comprises a cylinder 25 in which a movable piston 26 has been arranged. This piston 26 is moved back and forward by means of a stepping motor. The mould cavity 21 is hereby filled with molten thermoplastic material through a number of inlet gates 27' and 27" respectively, while the piston 26 is moved inward to decrease the volume of the hot runner system 22. The molten thermoplastic material is hereafter allowed to solidify somewhat closest to the walls of the mould cavity 21 by being cooled, which is achieved through contact with the walls in the mould cavity 21. A pressurised gas is then injected into the molten thermoplastic material so that a hollow space I is formed in the still molten thermoplastic material within the thicker parts of the mould cavity 21. The pressurised gas is forcing the not yet solidified thermoplastic material, through the lower inlet gate 27', back into the hot runner system 22 while the piston 26 is moved outward to increase the volume of the hot runner system 22. The pressure in the hollow space I will urge the material towards the walls of the mould cavity 21. The volume of the hot runner system 22 is allowed to increase to a predetermined volume by means of the volume adjusting means 24, which increase in volume corresponds to the volume of the thermoplastic material forced back into the hot runner system 22. The thermoplastic material, located inside the hot runner system 22, is kept in a molten state by means of heating elements. The thermoplastic material in the mould cavity 21 is then allowed to solidify completely. The gas is then evacuated, whereby the mould 20 can be opened, the product produced be removed and the process be repeated after having closed the mould 20.
The degree of solidification, and thereby the wall thickness surrounding the hollow space 1, can be guided by means of the period of time between injection of plastic material and the injection of gas. A longer period of time will give a thicker wall and also a more even wall thickness.
The volume adjustment means 24 comprises a cylinder 25 in which a movable piston 26 has been arranged. This piston 26 is moved back and forward by means of a stepping motor. The volume adjustment means 24 is further provided with a pressure sensor arranged between the piston 26 and the stepping motor. The pressure sensor is used for guiding the force that moves the piston 26 so that the pressure in the molten thermoplastic material will remain the desired during both the injection of thermoplastic material, when the volume of the hot runner system 22 is decreasing, and during the forming of the hollow space 1, when the volume of the hot runner system 22 is increasing.

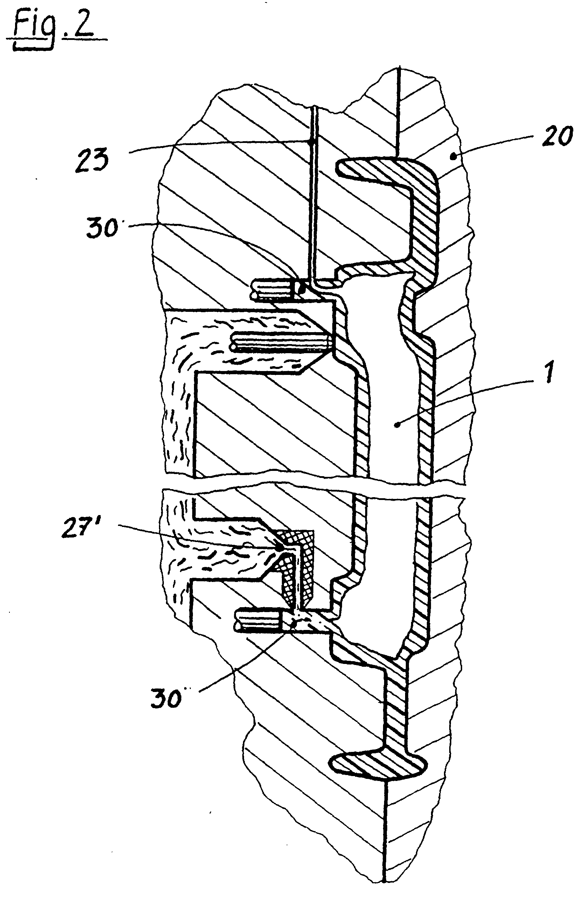

Figure 2 shows, schematically and in cross-section, parts of an embodiment of a mould 20. The process corresponds in the main with the one described together with figure 1, however, the fluid channel 23 runs into a cylindrical hollow space 30. The lower inlet gate 27' is also provided with such a cylindrical hollow space 30 placed between the mould cavity and the lower inlet gate 27'. The cylindrical hollow spaces 30 are filled with molten thermoplastic material which eventually will solidify. A communicating gas channel is hereby formed in the thermoplastic material located in the cylindrical hollow space 30 where the fluid channel 23 runs in. The communicating gas channel runs into the part where a hollow space 1 is formed. The second end of the cylindrical hollow spaces 30 are each provided with one piston which is used for pressing the thermoplastic material located in the cylindrical hollow space 30 into the product being produced. This takes place at the end of each moulding cycle. The hole that is used for the communication of the gas to and from the hollow space 1 can hereby be sealed. This is an advantage in for example products used together with food provisions since such holes allows fluids and dirt to enter into the hollow space 1 where colonies of bacteria could grow. The piston is suitably guided by the guiding system of the moulding machine and manoeuvred by means of hydraulics. The cylindrical hollow space 30 used for the communication of molten thermoplastic material is connected to the lower inlet gate 27' via a channel that has been insulated from the cooling system of the mould 20 so that the thermoplastic material therein, throughout the process, is in a molten state.
The cylindrical hollow spaces 30 are designed in such a way that the thermoplastic material in the centre of the space is still in a molten state when the gas is injected. This can for example be achieved by providing the walls of the mould surrounding the cylindrical hollow space 30 with a separate cooling system and thermal insulation so that the cooling and thereby the solidification time for the material within the space can be guided, independent of the solidification time for the rest of the thermoplastic material. The degree of solidification can hereby be adjusted so that the thermoplastic material in the cylindrical hollow spaces 30 doesn't solidify to early or to late in the moulding process

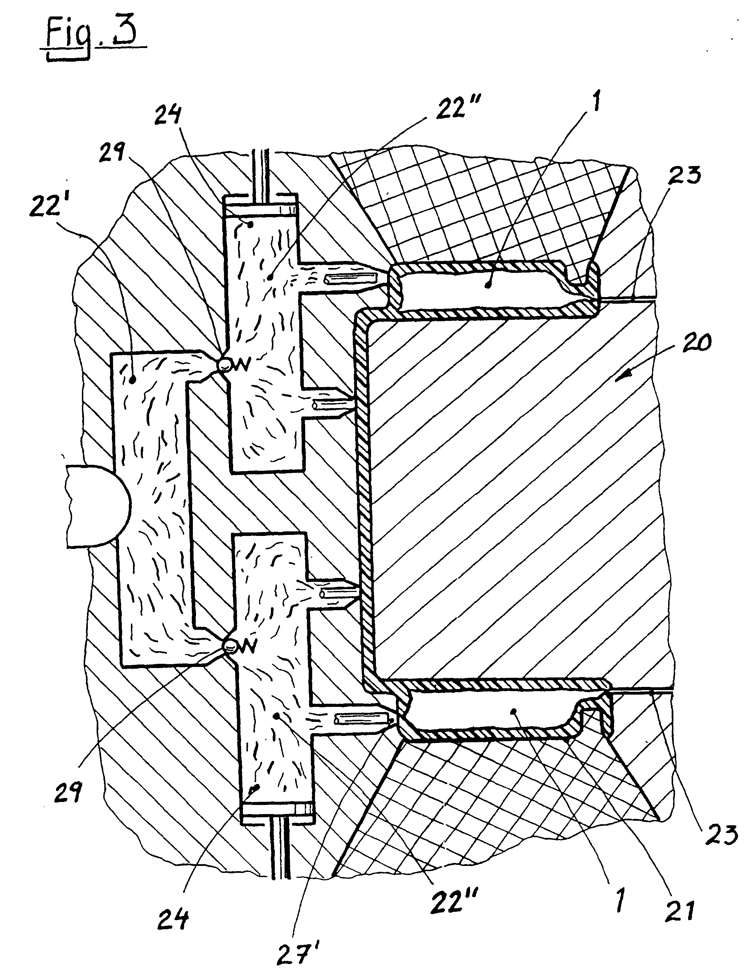

Figure 3 shows, schematically and in cross-section, an embodiment of a mould 20 where a product with two separate hollow spaces I is manufactured. The process corresponds in the main with the process described together with figure 1 above, the hot runner system 22 has, however, been divided into one primary and two secondary hot runner systems 22' and 22" respectively. The secondary hot runners 22" are each provided with one volume adjusting means 24. The forming of the hollow spaces 1 can hereby be formed independent of each other which will increase the ability to guide the process during the manufacturing. The secondary hot runners 22" is separated from the primary hot runner by means of valves 29 which prevent molten thermoplastic material from being forced from the secondary hot runners 22 " to the primary hot runner 22', or from one secondary hot runner 22" into a another secondary hot runner 22". These valves 29 are constituted by clack valves that requires no guiding but valves that require guiding can also be used. The latter can suitably be guided from the control program of the injection moulding machine.

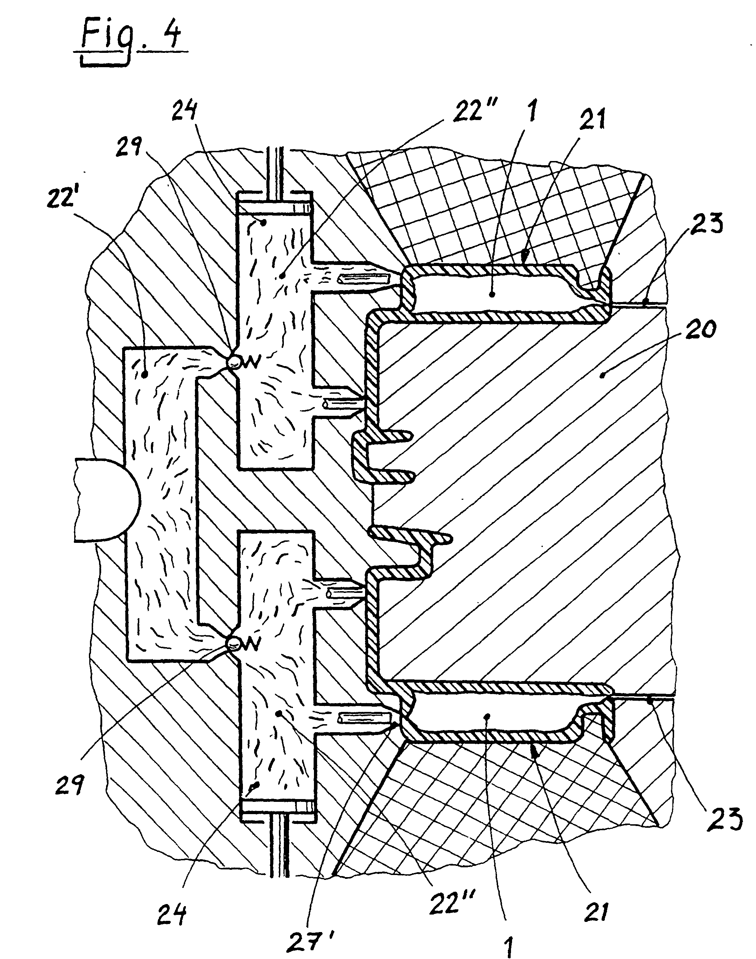

Figure 4 shows schematically and in cross-section an embodiment of a mould 20 comprising two separate mould cavities 21. The process corresponds in the main to the one described in connection to figure 1, the hot runner system 22 has, however, been divided into a primary hot runner 22' and two secondary hot runners 22". The secondary hot runners 22" each supplies one mould cavity 21 with molten thermoplastic material. The injection of thermoplastic material to the two mould cavities 21 and the forming of the hollow spaces 1 can be guided independently which will increase the ability to guide the process during the manufacturing. The secondary hot runners 22" are separated from the primary hot runner 22' and each other by means of valves 29 which prevents molten thermoplastic material from being forced from the secondary hot runners 22" into the primary hot runner 21' or from one secondary hot runner 22" to another secondary hot runner 22". These valves 29 are constituted by clack valves that require no guiding, but can also be constituted by valves that requires guiding. The latter is suitably guided by means of the control program of the moulding machine.

The invention is not limited by the embodiments shown since these can be altered in different ways within the scope of the invention. The moulds 20 as shown in figure 3 and 4 can for example be provided with cylindrical hollow spaces 30 placed between the fluid channels 23 and the mould cavities 21. Such cylindrical hollow spaces 30 can suitably also be placed between the lower inlet gate 27' and the mould cavity 21. The hot runner systems 22 shown in figure 1 and 2 may further be provided with additional volume adjusting means 24. This is suitable especially if large amounts of thermoplastic material is to be forced back into the hot runner system in connection to the forming of very large hollow spaces I One of the volume adjusting means 24 can hereby be made smaller and can be used for fine adjustments of the hot runner system volume in connection to the last stages of the forming of the hollow space 1. The secondary hot runners 22" as shown in figures 3 and 4 can also be provided with more than one volume adjusting means 24 of the same reason. It might also be possible to provide the primary hot runner 22' with one or more such large volume adjustment means 24, while the secondary hot runners 22" include smaller volume adjustment means 24 for fine adjustments in the last stages. The valves between the primary and the secondary hot runners 22' and 22" respectively, would then have to be guided, for example by the control program of the moulding machine. These valves would then be closed just before the last stages of the forming of the hollow space 1, when the fine adjustments of the same commence.

## Claims

1. A process in the manufacturing of a plastic product in a mould (20) including a hot runner system (22) through which molten thermoplastic material is injected and distributed to at least one mould cavity (21), whereby the plastic product includes at least one hollow space (1) achieved by means of a pressurised fluid which is injected through at least one fluid channel (23), wherein the hot runner system (22) is provided with at least one means for volume adjustment (24) so that the volume of the hot runner sytem (22) can be increased and decreased, wherein an amount of molten thermoplastic material is injected through the hot runner system (22) while the volume of the hot runner system (22) is decreased to a predetermined volume by means of the volume adjustment means (24), which decrease in volume corresponds to a part of the amount of injected molten thermoplastic material, so that the mould cavity (21) is at least partly, preferably completely filled with molten thermoplastic material after which the thermoplastic material is allowed to solidify somewhat closest to the walls of the mould cavity (21) whereupon a pressurised fluid is injected into the molten thermoplastic material whereby at least one hollow space (1) is formed in the still molten thermoplastic material, wherein the pressurised fluid forces molten thermoplastic material back into the hot runner system (22) while the volume of the hot runner system (22) is allowed to increase to a predetermined volume by means of the volume adjustment means (24), which increase in volume corresponds to the volume of the thermoplastic material forced out of the mould cavity (21), wherein the thermoplastic material in the mould cavity (21) is allowed to solidify further, preferably completely, wherein the fluid is evacuated whereupon the mould cavity can be opened, the manufactured product be removed and the procedure be repeated when the mould (20) has been closed again.

2. Process according to claim 1 **characterised in that** the decrease in volume in the hot runner system (22), in connection to the injection of molten thermoplastic material, is equal in volume to the increase in volume when forcing molten thermoplastic material back into the hot runner system (22).

3. Process according to claim 1 or 2 **characterised in that** the volume adjustment means (24) comprises a cylinder (25) in which a moveable piston (26) is applied, that the piston (26) is moved back and forward by means of a hydraulic cylinder, pneumatic cylinder, hydraulic motor, electric motor, pneumatic motor or the like.

4. Process according to any of the claims 1 - 3 **characterised in that** the hot runner system (22) is connected to the mould cavity (21) via two or more inlet gates (27) of which at least one can be closed.

5. Process according to any of the claims 1 - 4 **characterised in that** the hot runner system (22) is connected to a plastifier (28) via a valve (29) which prevents molten thermoplastic material from being forced from the hot runner (22) to the plastifier (28).

6. Process according to any of the claims 1 - 5 **characterised in that** the hot runner system (22) is 'divided into a primary and two or more secondary hot runners (22' and 22" respectively), whereby each of the secondary hot runners (22") are provided with one or more means for volume adjustment (24).

7. Process according to any of the claims 1 - 5 **characterised in that** the mould (20) includes two or more mould cavities (21), whereby the hot runner system (22) is divided into a primary and two or more secondary hot runners (22' and 22" respectively), whereby each of the secondary hot runners (22") are provided with one or more means for volume adjustment (24).

8. Process according to claim 6 or 7 **characterised in that** the secondary hot runners (22") are separated from the primary hot runner (22') and from each other by means of valves (29) which prevents molten thermoplastic material from being forced from the secondary hot runners (22") to the primary hot runner (22'), or from one secondary hot runner (22") to another secondary hot runner (22").

9. Process according to any of the claims 1 - 8 **characterised in that** the fluid used is a gas, preferably an inert gas such as nitrogen or carbon dioxide.

10. Process according to any of the claims 1 - 9 **characterised in that** the fluid is injected through a cylindrical hollow space (30), which in one end is connected to the product produced, and in connection to the other end is connected to a fluid channel (23), whereby the cylindrical hollow space (30) is filled with molten thermoplastic material which eventually will solidify, that the cylindrical hollow space (30) is designed so that the thermoplastic material in the centre will still be in a molten state when the fluid is injected, whereby a communicating channel is formed in the thermoplastic material in the cylindrical hollow space (30), which communicating channel runs into the product produced where a hollow space (1) can be formed

## Patentansprüche

1. Verfahren beim Herstellen eines Kunststoffprodukts in einem Werkzeug (20), das ein Heißkanaldüsensystem (22) umfasst, durch das geschmolzenes thermoplastisches Material in mindestens einen Werkzeughohlraum (21) eingespritzt und dort verteilt wird, wobei das Kunststoffprodukt zumindest einen Hohlraum (1) umfasst, der durch Fluid unter Druck erzeugt wird, das durch mindestens einen Fluidkanal (23) eingespritzt wird, wobei das Heißkanaldüsensystem (22) mit mindestens einem Mittel zur Volumenjustierung (24) versehen ist, so dass das Volumen des Heißkanaldüsensystems (22) erhöht und erniedrigt werden kann, wobei eine Menge geschmolzenen thermoplastischen Materials durch das Heißkanaldüsensystem (22) eingespritzt wird, während das Volumen des Heißkanaldüsensystems (22) auf ein vorbestimmtes Volumen durch das Volumenjustiermittel (24) verringert wird, wobei die Abnahme im Volumen einem Teil der Menge des eingespritzten geschmolzenen thermoplastischen Materials entspricht, so dass der Werkzeughohlraum (21) mindestens teilweise, vorzugsweise vollständig, mit geschmolzenem thermoplastischen Material gefüllt ist, wonach sich das thermoplastische Material direkt an den Wänden des Werkzeughohlraums (21) etwas verfestigen kann, wonach ein Fluid unter Druck in das geschmolzene thermoplastische Material eingespritzt wird, wodurch zumindest ein Hohlraum (1) in dem noch geschmolzenen thermoplastischen Material geformt wird, wobei das Fluid unter Druck das geschmolzenen thermoplastische Material zurück in das Heißkanaldüsensystem (22) drückt, während das Volumen des Heißkanaldüsensystems (22) sich um ein vorbestimmtes Volumen durch das Volumenjustiermittel (24) erhöhen kann, wobei die Zunahme des Volumens dem Volumen von thermoplastischem Material entspricht, das aus dem Werkzeughohlraum (21) gedrückt wird, wobei sich das thermoplastische Material in dem Werkzeughohlraum (21) weiter verfestigen kann, vorzugsweise vollständig, wobei das Fluid evakuiert wird, wonach der Formhohlraum geöffnet werden kann, das hergestellte Produkt entfernt werden kann und der Vorgang wiederholt werden kann, wenn die Form (20) wieder geschlossen worden ist.

2. Verfahren nach Anspruch 1, **dadurch gekennzeichnet, dass** die Abnahme im Volumen in dem Heißkanaldüsensystem (22) in Verbindung mit dem Einspritzen von geschmolzenem thermoplastischen Material gleich dem Volumen beim Volumenanstieg ist, wenn das geschmolzene thermoplastische Material zurück in das Heißkanaldüsensystem (22) gedrückt wird.

3. Verfahren nach Anspruch 1 oder 2, **dadurch gekennzeichnet, dass** das Volumenjustiermittel (24) einen Zylinder (25) umfasst, in dem ein bewegbarer Kolben (26) angewendet wird, dass der Kolben (26) zurück und vorwärts durch einen hydraulischen Zylinder, pneumatischen Zylinder, hydraulischen Motor, elektrischen Motor, pneumatischen Motor oder ähnliches bewegt wird.

4. Verfahren nach einem der Ansprüche 1 bis 3, **dadurch gekennzeichnet, dass** das Heißkanaldüsensystem (22) mit dem Werkzeughohlraum (21) über zwei oder mehr Einlässe (27) verbunden ist, von denen mindestens einer geschlossen werden kann.

5. Verfahren nach einem der Ansprüche 1 bis 4, **dadurch gekennzeichnet, dass** das Heißkanaldüsensystem (22) mit einem Aushärter (28) über ein Ventil (29) verbunden ist, das verhindert, dass geschmolzenes thermoplastisches Material aus dem Heißkanaldüsensystem (22) zu dem Aushärter (28) gedrückt wird.

6. Verfahren nach einem der Ansprüche 1 bis 5, **dadurch gekennzeichnet, dass** das Heißkanaldüsensystem (22) in eine primäre und zwei oder mehr sekundäre Heißkanaldüsen (22' und 22" jeweils) geteilt ist, wobei jede der Heißkanaldüsen (22") mit einem oder mehreren Mitteln zur Volumenjustierung (24) versehen ist.

7. Verfahren nach einem der Ansprüche 1 bis 5, **dadurch gekennzeichnet, dass** das Werkzeug (20) zwei oder mehr Werkzeughohlräume (21) umfasst, wobei das Heißkanaldüsensystem (22) in eine primäre und zwei oder mehr sekundäre Heißkanaldüsen (22' und 22" jeweils) geteilt ist, wobei jede der sekundären Heißkanaldüsen (22") mit einem oder mehreren Volumenjustiermitteln (24) versehen ist.

8. Verfahren nach Anspruch 6 oder 7, **dadurch gekennzeichnet, dass** die sekundären Heißkanaldüsen (22") von der primären Heißkanaldüse (22') und voneinander durch Ventile (29) getrennt sind, was verhindert, dass geschmolzenes thermoplastisches Material von den sekundären Heißkanaldüsen (22") zu der primären Heißkanaldüse (22') oder von einer sekundären Heißkanaldüse (22") zu einer anderen sekundären Heißkanaldüse (22") gedrückt wird.

9. Verfahren nach einem der Ansprüche 1 bis 8, **dadurch gekennzeichnet, dass** das verwendete Fluid ein Gas ist, vorzugsweise ein inertes Gas, wie Stickstoff oder Kohlendioxid.

10. Verfahren nach einem der Ansprüche 1 bis 9, **dadurch gekennzeichnet, dass** das Fluid durch einen zylindrischen Hohlraum (30) eingespritzt wird, der an einem Ende mit dem hergestellten Produkt verbunden ist und in Verbindung mit dem anderen Ende mit einem Fluidkanal (23) verbunden ist, wobei der zylindrische Hohlraum (30) mit geschmolzenem thermoplastischem Material gefüllt wird, das sich möglicherweise verfestigt, dass der zylindrische Hohlraum (30) so gestaltet ist, dass das thermoplastische Material in der Mitte noch in einem geschmolzenen Zustand ist, wenn das Fluid eingespritzt wird, wobei ein Verbindungskanal in dem thermoplastischen Material in dem zylindrischen Hohlraum (30) geformt wird, der in das hergestellte Produkt läuft, in dem ein Hohlraum (1) geformt werden kann.

## Revendications

1. Procédé de fabrication d'un produit en plastique dans un moule (20) comportant un système à canaux chauffés (22) par lequel une matière thermoplastique fondue est injectée et distribuée à au moins une cavité de moule (21), grâce à quoi le produit en plastique comporte au moins un espace creux (1) obtenu au moyen d'un fluide sous pression qui est injecté par au moins un canal à fluide (23), dans lequel le système à canaux chauffés (22) est pourvu d'au moins un moyen de réglage de volume (24) de sorte que le volume du système à canaux chauffés (22) peut être augmenté et réduit, dans lequel on injecte une quantité de matière thermoplastique fondue par le système à canaux chauffés (22) pendant que l'on réduit le volume du système à canaux chauffés (22) jusqu'à un volume prédéterminé à l'aide du moyen de réglage de volume (24), laquelle réduction de volume correspond à une partie de la quantité de matière thermoplastique moulée injectée, de sorte que la cavité de moule (21) est au moins partiellement, de préférence complètement remplie de matière thermoplastique fondue après quoi on laisse la matière thermoplastique se solidifier un peu au plus près des parois de la cavité de moule (21) après quoi on injecte un fluide sous pression dans la matière thermoplastique fondue grâce à quoi au moins un espace creux (1) est formé dans la matière thermoplastique encore en fusion, dans lequel le fluide sous pression repousse la matière thermoplastique fondue dans le système à canaux chauffés (22) pendant que l'on fait augmenter le volume du système à canaux chauffés (22) jusqu'à un volume prédéterminé à l'aide du moyen de réglage de volume (24), laquelle augmentation de volume correspond au volume de matière thermoplastique repoussée hors de la cavité de moule (21), dans lequel on laisse la matière thermoplastique contenue dans la cavité de moule (21) se solidifier davantage, de préférence complètement, dans lequel on évacue le fluide après quoi la cavité de moule peut être ouverte, le produit fabriqué peut être retiré et la procédure peut être répétée lorsque le moule (20) a été refermé.

2. Procédé selon la revendication 1, **caractérisé en ce que** la réduction de volume du système à canaux chauffés (22), en connexion avec l'injection de matière thermoplastique fondue, est égale en volume à l'augmentation de volume lorsque l'on repousse la matière thermoplastique fondue dans le système à canaux chauffés (22).

3. Procédé selon la revendication 1 ou 2, **caractérisé en ce que** le moyen de réglage de volume (24) comprend un cylindre (25) dans lequel est placé un piston mobile (26), **en ce que** le piston (26) est déplacé en arrière et en avant à l'aide d'un vérin hydraulique, d'un vérin pneumatique, d'un moteur hydraulique, d'un moteur électrique, d'un moteur pneumatique ou système similaire.

4. Procédé selon l'une quelconque des revendications 1 à 3, **caractérisé en ce que** le système à canaux chauffés (22) est connecté à la cavité de moule (21) via deux vannes d'entrée (27) ou plus, dont au moins une peut être fermée.

5. Procédé selon l'une quelconque des revendications 1 à 4, **caractérisé en ce que** le système à canaux chauffés (22) est connecté à un appareil de plastification (28) via un clapet (29) qui empêche la matière thermoplastique fondue de passer du canal chauffé (22) à l'appareil de plastification (28).

6. Procédé selon l'une quelconque des revendications 1 à 5, **caractérisé en ce que** le système à canaux chauffés (22) est divisé en un canal primaire et deux canaux secondaires (respectivement 22' et 22") ou plus, chacun des canaux chauffés secondaires (22") étant muni d'un ou plusieurs moyen(s) de réglage de volume (24).

7. Procédé selon l'une quelconque des revendications 1 à 5, **caractérisé en ce que** le moule (20) comporte deux cavités de moule (21) ou plus, le système à canaux chauffés (22) étant divisé en un canal primaire et deux canaux secondaires (respectivement 22' et 22") ou plus, chacun des canaux chauffés secondaires (22") étant muni d'un ou plusieurs moyen(s) de réglage de volume (24).

8. Procédé selon la revendication 6 ou 7, **caractérisé en ce que** les canaux chauffés secondaires (22") sont séparés du canal primaire (22') et les uns des autres par des clapets (29) qui empêchent la matière thermoplastique fondue de passer des canaux chauffés secondaires (22") au canal primaire (22'), ou d'un canal secondaire (22") à un autre canal secondaire (22").

9. Procédé selon l'une quelconque des revendications 1 à 8, **caractérisé en ce que** le fluide est un gaz, de préférence un gaz inerte tel que l'azote ou le dioxyde de carbone.

10. Procédé selon l'une quelconque des revendications 1 à 9, **caractérisé en ce que** le fluide est injecté à travers un espace cylindrique creux (30), qui en une extrémité est connecté au produit fabriqué, et en connexion à l'autre extrémité est connecté à un canal à fluide (23), grâce à quoi l'espace cylindrique creux (30) est rempli de matière thermoplastique fondue qui est destinée à se solidifier, **en ce que** l'espace cylindrique creux (30) est conçu de telle manière que la matière thermoplastique présente au centre sera toujours dans un état fondu lorsque le fluide est injecté, grâce à quoi un canal de communication est formé dans la matière thermoplastique dans l'espace cylindrique creux (30), lequel canal de communication traverse le produit fabriqué où un espace creux (1) peut être formé.
